# EUROPÄISCHE PATENTANMELDUNG

(11) **EP 3 992 005 A1**
(43) Veröffentlichungstag der Anmeldung: **04.05.2022**
(21) Anmeldenummer: 21204892.0
(22) Anmeldetag: 27.10.2021
(51) Int. Cl.: B60J 7/14, B65D 88/12

(54) **TRANSPORTBEHÄLTER**

(30) Priorität: 27.10.2020 AT 509232020
(71) Anmelder: Wingliner GmbH, 5301 Eugendorf (AT)
(72) Erfinder: STRASSER, Johann, 5020 Salzburg (AT)
(74) Vertreter: SONN Patentanwälte OG

(57) **Zusammenfassung**

Transportbehälter (1), insbesondere für einen Lastkraftwagen, aufweisend:
einen Rahmenaufbau (2),
zwei Seitenflächen (3),
ein Dach (7),
eine Öffnungseinrichtung (9) zum Überführen des Dachs (7) zwischen einer eine Dachöffnung (10) verschließenden Schließstellung und einer die Dachöffnung (10) freigebenden Offenstellung, wobei das Dach (7) über ein Scharnier (11A) verschwenkbar am Rahmenaufbau (2) angeordnet ist, wobei die Öffnungseinrichtung (9) einen verschwenkbar mit dem Dach (7) verbundenen Lenker (12) und einen Antrieb (13) zum Verschwenken des Lenkers (12) aufweist.

## Beschreibung

Die Erfindung betrifft einen Transportbehälter, insbesondere für einen Lastkraftwagen, aufweisend:
einen Rahmenaufbau,
zwei Seitenflächen,
ein Dach,
eine Öffnungseinrichtung zum Überführen des Dachs zwischen einer eine Dachöffnung verschließenden Schließstellung und einer die Dachöffnung freigebenden Offenstellung.

Weiters betrifft die Erfindung einen Lastkraftwagen mit einem Fahrzeugaufbau, welcher durch einen Transportbehälter nach einem der Ansprüche gebildet ist.

Die JP 2000225847 offenbart einen LKW-Aufbau mit einem Dach und zweiteiligen Seitenwänden, welche durch Betätigung von Linearantrieben zwischen einer Schließstellung und einer Offenstellung verschwenkbar sind. In der hochgeschwenkten Stellung können die Seitenwände in Querrichtung des LKW-Aufbaus verfahren werden, wobei zwei Dachhälften zusammengeklappt werden. Zu diesem Zweck sind Getriebemotoren vorgesehen, deren Drehbewegung mit Hilfe von Zahnradantrieben auf die Lagerung der Dachhälften übertragen wird. Zudem sind bei diesem Stand der Technik Führungsrollen in entsprechenden Führungsschienen vorgesehen, welche die Verschiebung der Seitenwände oberhalb des Transportbehälters ermöglichen.

Die JP 62203818 A zeigt einen Transportbehälter mit mehrteiligen Seitenwänden, welche aus der Schließstellung nach oben verschwenkt und seitlich verfahren werden können. Das Dach weist einzelne Dachteile auf, welche beim Verfahren der Seitenwände mit Hilfe eines Zahnradantriebs zusammengeklappt werden. Die Verschwenkantriebe sind bei diesem Stand der Technik durch Motoren gebildet, welche über kurze Umlenkhebel und Kulissenführungen auf die Seitenwände wirken.

Schließlich zeigt die JP 6167623 A einen solchen LKW-Aufbau, bei welchem die Verschwenkung der Seitenwände und die Verschiebung der hochgeschwenkten Seitenwände mit Hilfe eines Motors bewerkstelligt wird, welcher mit einer Antriebswelle gekoppelt ist. Ein Transportbehälter mit öffenbarer Seitenwand ist in WO 2013/104012 A1 gezeigt.

Die US 4,585,266 A betrifft andersartigen Stand der Technik.

Nachteilig an den bekannten Ausführungen ist jedoch, dass im Dachbereich des LKW-Aufbaus Querführungen vorgesehen werden müssen, entlang welcher die Dachteile verschoben werden. Diese Querführungen haben sich als wenig zuverlässig erwiesen. Darüber hinaus ist der konstruktive Aufwand für die Querführungen hoch. Weiters ist nachteilig, dass die Dachkonstruktion vergleichsweise viel Raum einnimmt, wodurch der zur Verfügung stehende Transportraum verringert wird. Schließlich ist auch die Gesamtbreite der Seitenwand- und Dachkonstruktion hoch.

Demnach besteht die Aufgabe der vorliegenden Erfindung darin, die Nachteile des Standes der Technik zu beheben bzw. zu lindern. Bei einer bevorzugten Ausführung setzt sich die Erfindung zum Ziel, einen Transportbehälter zu schaffen, bei dem die Dachöffnung mit geringem Aufwand und auf Dauer zuverlässig freigegeben und geschlossen werden kann, ohne die Gesamtbreite des Transportbehälters in der Schließstellung des Dachs wesentlich zu vergrößern.

Diese Aufgabe wird durch einen Transportbehälter mit den Merkmalen von Anspruch 1 und mit einem Lastkraftwagen mit den Merkmalen von Anspruch 10 gelöst. Bevorzugte Ausführungsformen sind in den abhängigen Ansprüchen angegeben.

Erfindungsgemäß ist das Dach über ein Scharnier verschwenkbar am Rahmenaufbau angeordnet, wobei die Öffnungseinrichtung einen verschwenkbar mit dem Dach verbundenen Lenker und einen Antrieb zum Verschwenken des Lenkers aufweist.

Mit dem Antrieb kann der Lenker um eine (abgesehen von der Verschwenkung) ortsfeste Schwenkachse am Rahmenaufbau verschwenkt werden. Der Lenker, bevorzugt ein längenunveränderlicher Lenker, überträgt ein Drehmoment derart auf das Dach, insbesondere auf eine Querkante des Dachs, dass das Dach um die (abgesehen von der Verschwenkung) ortsfeste Schwenkachse des Scharniers verschwenkt wird. Je nach Richtung der Verschwenkung des Lenkers kann so die oberseitige Dachöffnung am Transportbehälter freigegeben oder verschlossen werden. Das Scharnier ist bevorzugt an einem oberen Längsrand des Transportbehälters, insbesondere oberhalb der Schwenkachse des Lenkers, angeordnet. Die erfindungsgemäße Ausführung des Transportbehälters ist konstruktiv besonders einfach und stabil. Weiters wird eine kompakte Bauweise erzielt, welche ein hohes Transportvolumen im Inneren des Transportbehälters ermöglicht. Vorteilhaft ist insbesondere, dass der Transportbehälter ohne wesentliche Vergrößerung der Gesamtbreite mit einer Dachöffnung ausgebildet werden kann.

Die Orts- und Richtungsangaben, wie horizontal und vertikal oder oben und unten, beziehen sich für die Zwecke dieser Offenbarung auf den bestimmungsgemäßen Gebrauchszustand des Transportbehälters, bei der bevorzugten Ausführung des Transportbehälters als Fahrzeugaufbau auf den Fahrzustand des Lastkraftwagens, wobei die Längsrichtung des Transportbehälters der Fahrtrichtung bei Geradeausfahrt entspricht.

Die beiden, vorzugsweise im Wesentlichen vertikalen Seitenflächen begrenzen den Transportbehälter seitlich nach außen. Je nach Ausführung können die beiden Seitenflächen des Transportbehälters jeweils eine Seitenöffnung aufweisen, welche mit einer Seitenwand abgeschlossen sein kann. Die Seitenwände können unbeweglich am Rahmenaufbau angeordnet oder in eine die Seitenöffnung freigebende Freigabestellung überführbar sein.

In der Schließstellung ist das Dach bevorzugt im Wesentlichen horizontal angeordnet. In der Offenstellung ist das Dach bevorzugt seitlich von einer der beiden Seitenflächen des Transportbehälters angeordnet, welche bevorzugt im Wesentlichen vertikal angeordnet ist. Bevorzugt ist das Dach in der Offenstellung zumindest teilweise im Wesentlichen vertikal angeordnet, um den Platzbedarf in der Offenstellung möglichst gering zu halten.

In der Offenstellung erstreckt sich die Dachöffnung bevorzugt über mehr als die halbe Breite des Transportbehälters, insbesondere über im Wesentlichen die ganze Breite zwischen den Innenseiten von oberen Rahmenteilen des Rahmenaufbaus.

Beim Überführen von der Schließ- in die Offenstellung verschwenkt der Lenker bevorzugt um im Wesentlichen 270°. Vorzugsweise greift der Lenker an einer Querkante des Dachs an.

Um das Scharnier seitlich nach innen rücken zu können und dennoch die Verschwenkung des Dachs von der Schließ- in die Offenstellung zu ermöglichen, ist es günstig, wenn eine Schwenkachse des Scharniers in der Schließstellung oberhalb der Oberseite des Dachs angeordnet ist. Wenn ein mit dem Scharnier verbundener Längsrand des Dachs in Richtung senkrecht zur Seitenfläche weiter innen als die Schwenkachse des Scharniers angeordnet ist, kann das Dach beim Überführen in die Offenstellung zuerst über die Schwenkachse gehoben und anschließend zur Seitenfläche hin abgesenkt werden.

Bei einer bevorzugten Ausführungsform weist das Scharnier eine Kröpfung auf. Zur Ausbildung der Kröpfung weist das Scharnier bevorzugt einen Verbindungssteg auf, welcher die Schwenkachse des Scharniers mit dem Dach, insbesondere mit einem Längsrand des Dachs, verbindet. Zur Ausbildung der Schwenkachse kann ein Achselement, insbesondere ein Drehbolzen, vorgesehen sein, welcher in einer Halterung drehbar gelagert ist. Bevorzugt ist der Verbindungssteg, insbesondere über einen Verbindungsflansch, mit einer Schmalseite am zugewandten Längsrand des Dachs verbunden. Der Verbindungssteg kann um ein Mehrfaches, insbesondere ein Vielfaches, kürzer als der Lenker sein.

Um die gewünschte Verschwenkung des Dachs bei möglichst geringer Gesamtbreite des Transportbehälters zu ermöglichen, verläuft der Verbindungssteg bei einer bevorzugten Ausführungsform in der Schließstellung von der Schwenkachse zum Längsrand des Dachs schräg nach unten, insbesondere in einem Winkel von 30° bis 60°, vorzugsweise im Wesentlichen 45°, zur Horizontalen.

Bei einer bevorzugten Ausführungsform ist die Schwenkachse des Scharniers in Richtung senkrecht zur Seitenfläche nach innen versetzt. Vorzugsweise ist ein die Schwenkachse bildendes Achselement in horizontaler Richtung senkrecht zur Seitenfläche vollständig weiter innen als die im Wesentlichen vertikale Seitenfläche angeordnet. Dadurch wird die Gesamtbreite des Transportbehälters durch das öffenbare Dach nicht (oder nur unwesentlich) erhöht. Aufgrund der nach innen versetzten Schwenkachse kann weiters das Dach als Ganzes oder zumindest ein mit dem Scharnier verbundenes Dachteil in der Offenstellung benachbart der Seitenfläche oder in Kontakt mit der Seitenfläche angeordnet sein. Auf diese Weise wird eine besonders platzsparende und stabile Anordnung in der Offenstellung erzielt.

Um eine großflächige Dachöffnung zu schaffen, ohne die Gesamtbreite des Transportbehälters wesentlich zu erhöhen, ist das Scharnier bei einer bevorzugten Ausführungsform an einer (oberen) Längsseite des Transportbehälters angeordnet, wobei das Scharnier in der Schließstellung des Dachs in Richtung senkrecht zur Seitenfläche im Wesentlichen nicht über die Seitenfläche nach außen vorsteht. Somit ist das Scharnier bei dieser Ausführungsform im Wesentlichen vollständig von der Seitenfläche seitlich (d.h. in Querrichtung senkrecht zur Seitenfläche) nach innen gerückt.

Bei einer bevorzugten Ausführung weist das Dach ein erstes Dachteil und ein zweites Dachteil auf, welche an einander zugewandten Längskanten gelenkig miteinander verbunden sind. Dadurch wird wenig Raum oberhalb des Transportbehälters für das Öffnen des Dachs benötigt. Weiters wird das nötige Drehmoment reduziert. Bevorzugt sind das erste und das zweite Dachteil als Dachhälften ausgebildet. Das Scharnier ist bevorzugt am ersten Dachteil befestigt. Bei einer bevorzugten Ausführung ist ein Stützelement, insbesondere ein Stützlenker, vorgesehen, welches um eine (abgesehen von der Verschwenkung) ortsfeste Gelenkachse verschwenkbar am Rahmenaufbau angeordnet ist. Das Stützelement ist gelenkig mit dem zweiten Dachteil, insbesondere an einem vom Scharnier abgewandten Ende, verbunden.

Als Antrieb für den Lenker ist bevorzugt eine Drehwelle vorgesehen, welche sich vorzugsweise an einer oberen Längsseite des Transportbehälters im Wesentlichen in horizontaler Richtung erstreckt. Die Drehwelle wird mit einem Motor, insbesondere einem Elektromotor, in Drehbewegung versetzt. Diese Drehbewegung wird so auf den Lenker übertragen, dass der Lenker entsprechend verschwenkt wird. Bevorzugt ist die Drehwelle im Inneren eines Gehäuses des Rahmenaufbaus angeordnet. Bei einer bevorzugten Ausführung ist das Scharnier an dem Gehäuse für die Drehwelle befestigt.

Um eine günstige Lastübertragung zu ermöglichen, ist bevorzugt (zumindest) ein weiteres Scharnier entsprechend dem Scharnier vorgesehen, wobei das Scharnier und das weitere Scharnier in Längsrichtung des Dachs voneinander beabstandet sind. Bevorzugt sind das Scharnier und das weitere Scharnier an den Endbereichen der Längsseite des Transportbehälters vorgesehen, wobei bevorzugt zumindest ein zusätzliches Scharnier, vorzugsweise mehrere zusätzliche Scharniere, zwischen dem Scharnier und dem weiteren Scharnier vorgesehen sind.

Bei einer bevorzugten Anwendung ist ein Lastkraftwagen mit einem Fahrzeugaufbau vorgesehen, welcher durch einen Transportbehälter in einer der zuvor beschriebenen Ausführungsvarianten gebildet ist.

Die Erfindung wird nachstehend anhand eines Ausführungsbeispiels in den Zeichnungen weiter erläutert.
Fig. 1 zeigt eine schaubildliche Ansicht eines erfindungsgemäßen Transportbehälters.

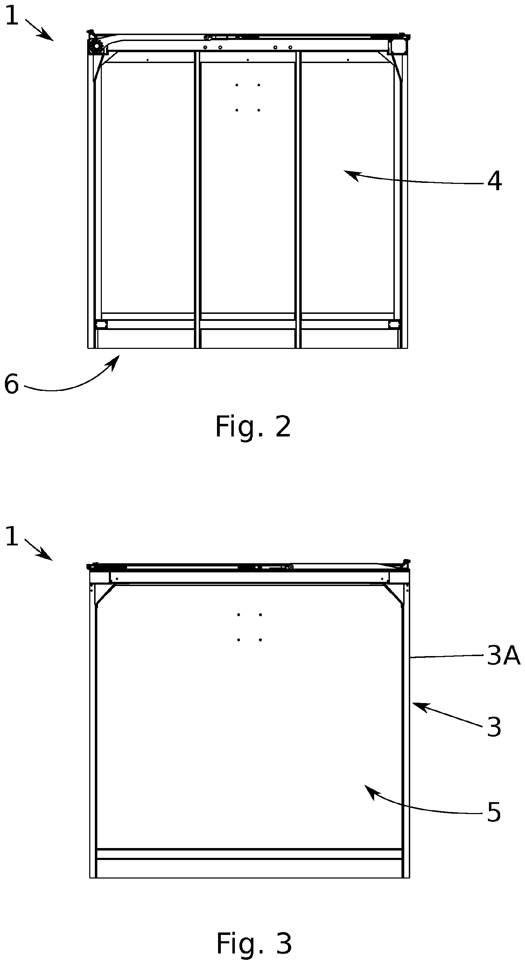

Fig. 2 zeigt eine Vorderansicht des Transportbehälters gemäß Fig. 1.
Fig. 3 zeigt eine Rückansicht des Transportbehälters gemäß Fig. 1.

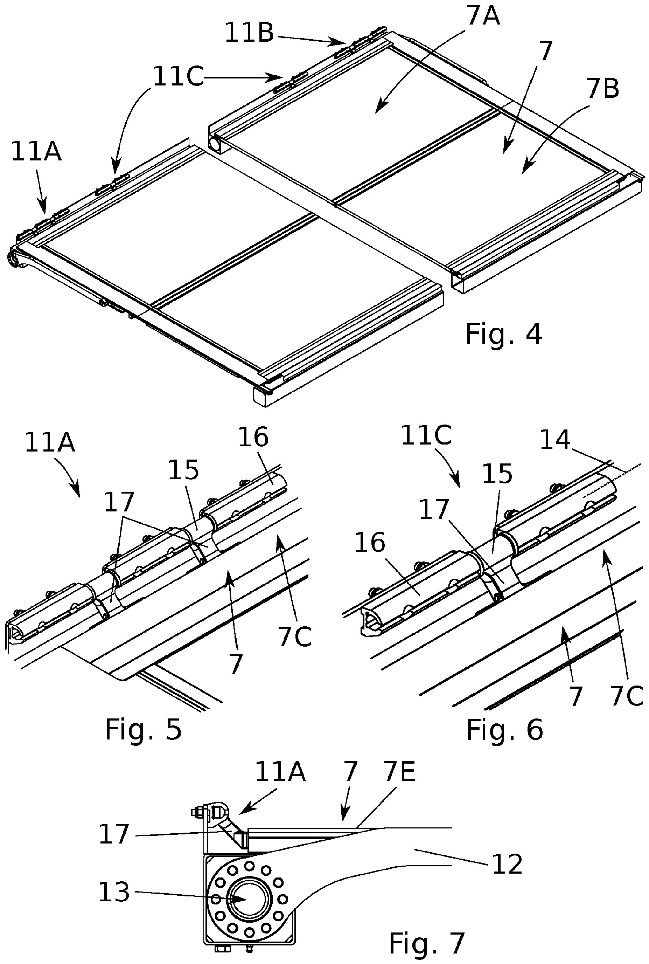

Fig. 4 zeigt eine schaubildliche Ansicht des Dachs des Transportbehälters gemäß Fig. 1 bis 3 in einer Schließstellung.
Fig. 5 und Fig. 6 zeigen je ein Detail der Fig. 4.
Fig. 7 zeigt ein weiteres Detail des Dachs im Bereich eines gekröpften Scharniers.
Fig. 8 bis 12 zeigt das Dach in verschiedenen Phasen des Öffnungsvorgangs.
Fig. 13 zeigt eine Seitenansicht des Dachs in verschiedenen Phasen des Öffnungsvorgangs, wobei die Schließstellung mit durchgezogenen Linien und die Zwischenstellungen sowie die Offenstellung mit strichlierten Linien veranschaulicht ist.

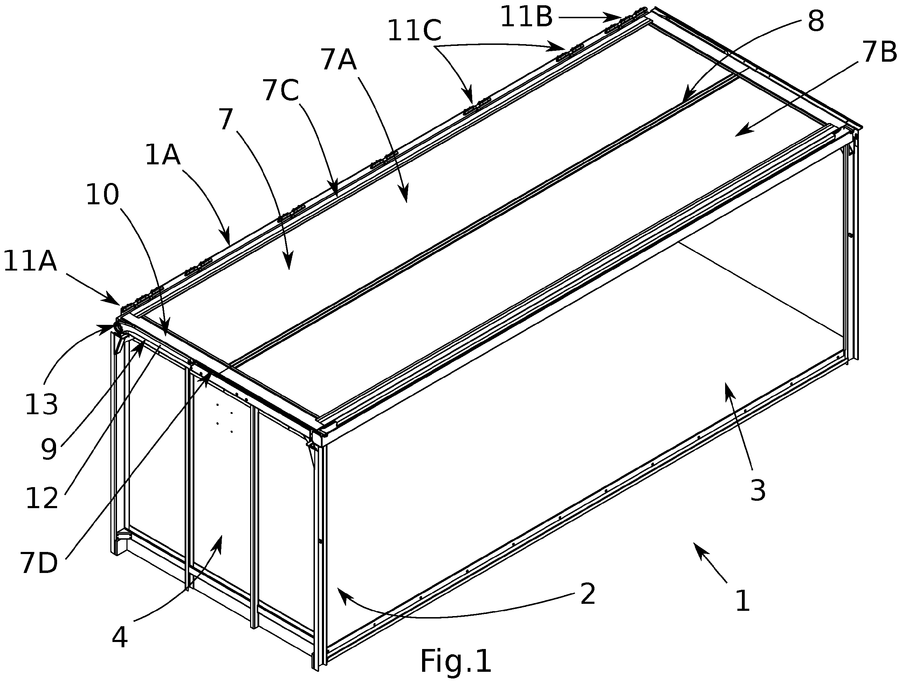

Fig. 1 zeigt einen quaderförmigen Transportbehälter 1, welcher als Fahrzeugaufbau eines Lastkraftwagens (nicht gezeigt) ausbildet sein kann. Der Transportbehälter 1 weist einen Rahmenaufbau 2 auf, an dem zwei gegenüberliegende, vertikale Seitenflächen 3 gebildet sind, die in der gezeigten Darstellung Seitenöffnungen 3A ins Innere des Transportbehälters 1 aufweisen, welche mit Seitenwänden (nicht gezeigt) verschlossen sein können. Der Transportbehälter 1 weist zudem eine vertikale Frontwand 4, eine vertikale Rückwand 5, einen horizontalen Boden 6 und ein plattenförmiges Dach 7 auf, welche an dem Rahmenaufbau 2 angeordnet sind. Das Dach 7 weist ein erstes Dachteil 7A und ein zweites Dachteil 7B auf, welche an einander zugewandten Längskanten über ein Gelenk 8 miteinander verbunden sind.

Darüber hinaus ist eine Öffnungseinrichtung 9 zum Überführen des Dachs 7 zwischen einer Schließstellung, in welcher eine ins Innere des Transportbehälters 1 führende, oberseitige Dachöffnung 10 vollständig verschlossen ist, und einer die Dachöffnung 10 vollständig freigebenden Offenstellung auf, in welcher das Innere des Transportbehälters durch die Dachöffnung 10 beladen werden kann. Ein Längsrand 7C des Dachs 7 ist verschwenkbar an einem oberen Längsrand 1A des Transportbehälters 1 angeordnet. Zu diesem Zweck sind in der gezeigten Ausführung ein Scharnier 11A am einen Ende des oberen Längsrandes 1A, ein weiteres Scharnier 11B am anderen Ende des oberen Längsrandes 1A und zusätzliche Scharniere 11C in Längsrichtung gesehen zwischen dem Scharnier 11A und dem weiteren Scharnier 11B vorgesehen, welche jeweils mit dem Längsrand 7C des Dachs 7 verbunden sind. Zum Öffnen des Dachs 7 weist die Öffnungseinrichtung 9 einen jeweils verschwenkbar mit dem Dach 7 und mit dem Rahmenaufbau 2 verbundenen Lenker 12 und einen Antrieb 13 zum Verschwenken des Lenkers 12 auf. Als Antrieb 13 für den Lenker 12 ist eine Drehwelle vorgesehen, welche sich am oberen Längsrand 1A entlang des Transportbehälters 1 in einem kastenförmigen Gehäuse erstreckt. Durch Drehung der Drehwelle kann der Lenker 12 verschwenkt werden, welcher an einer Querkante 7D des ersten Dachteils 7A angreift. Dadurch wird das Dach 7 von der Schließ- in Richtung der Offenstellung verschwenkt. Weiters ist ein Stützelement 18, beispielsweise eine Teleskopstange, gelenkig am Rahmenaufbau 2 angeordnet. Mit Hilfe des Stützelements 18 wird das freie Ende des zweiten Dachteils 7B gegenüberliegend des Gelenks 8 beim Öffnen und Schließen des Dachs 7 geführt.

Das Scharnier 11A weist eine horizontale Schwenkachse 14 in Richtung des oberen Längsrandes 1A des Transportbehälters 1 auf. Die Schwenkachse 14 des Scharniers 11A ist in der Schließstellung oberhalb einer Oberseite 7E des Dachs 7 angeordnet. Zur Ausbildung der Schwenkachse 14 ist ein Achselement 15, hier ein Achsbolzen, vorgesehen, welcher in einer Halterung 16 drehbar aufgenommen ist. Das Scharnier 11A weist zumindest einen Verbindungssteg 17 auf, welcher die Schwenkachse 14 des Scharniers 11A mit dem zugewandten Längsrand 7C des Dachs 7 verbindet. Der Verbindungssteg 17 kann einteilig mit dem Achselement 15 gebildet sein. In der gezeigten Ausführung weist das Scharnier 11A zwei Verbindungsstege 17 auf. Das weitere Scharnier 11B ist ident ausgebildet. Die zusätzlichen Scharniere 11C weisen hingegen genau einen Verbindungssteg 17 auf. Der Verbindungssteg 17 erstreckt sich, bezogen auf die Schließstellung des Dachs 7, von der Schwenkachse 14 schräg nach unten bis zum Längsrand 7C des Dachs 7, vorzugsweise in einem Winkel von 30° bis 60°, beispielsweise im Wesentlichen 45°, zur Horizontalen. Die Schwenkachse 14 des Scharniers 11A ist in horizontaler Richtung senkrecht zur Seitenfläche 3 (d.h. in Querrichtung) von der Seitenfläche 3 derart nach innen (d.h. zur gegenüberliegenden Seitenfläche 3 hin) versetzt, dass das Scharnier 11A in der Schließstellung des Dachs 7 in Querrichtung im Wesentlichen nicht über die Seitenfläche 3 nach außen vorsteht.

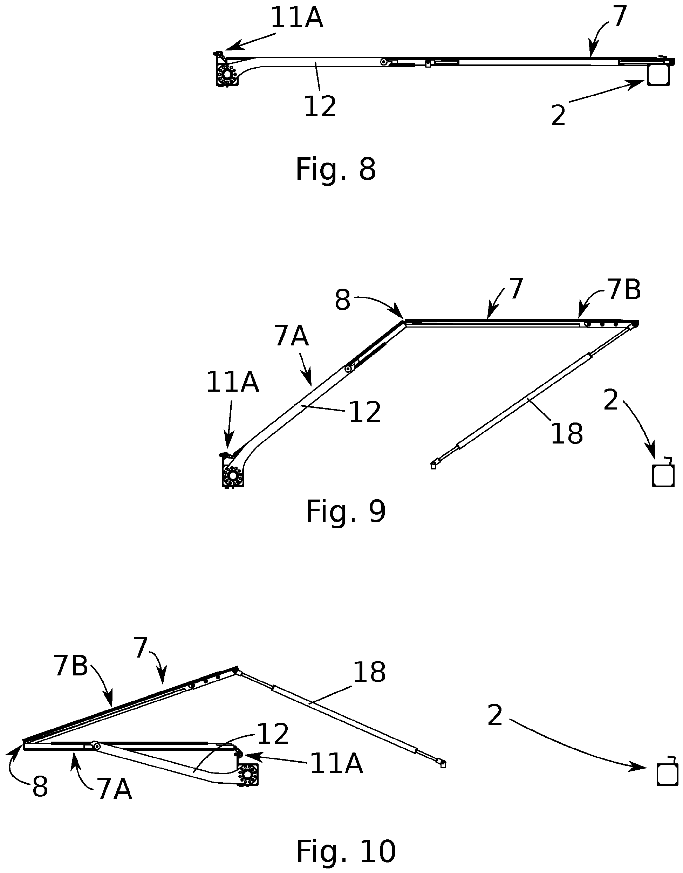

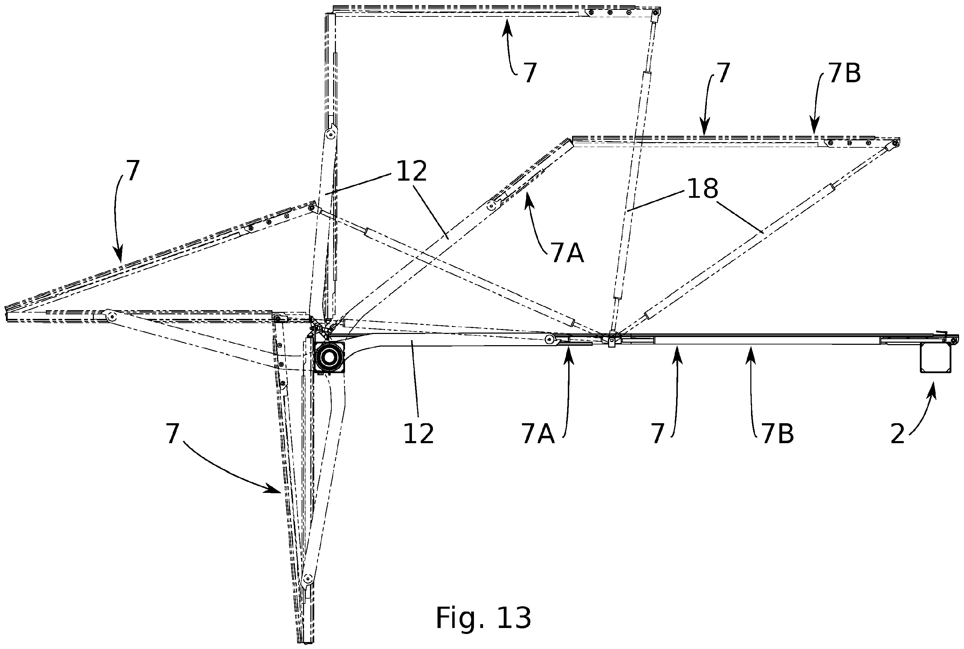

Die Fig. 8 bis 13 zeigen die einzelnen Phasen beim Überführen des Dachs 7 von der Schließ- in die Offenstellung. Zum Schließen des Dachs 7 werden diese Schritte in umgekehrter Reihenfolge durchgeführt.

In der Schließstellung, vgl. Fig. 8, ist das Dach 7 in horizontaler Lage auf der Oberseite des Rahmenaufbaus 2 angeordnet. Die Dachöffnung 10 ist geschlossen. Der Lenker 12 befindet sich ebenfalls in horizontaler Lage. Im nächsten Schritt wird der Antrieb 13 für den Lenker 12 betätigt, wodurch das Dach 7 in eine erste Zwischenstellung, vgl. Fig. 9, gehoben wird. Das zweite Dachteil 7B ist mit Hilfe des Gelenks 8 gegenüber dem ersten Dachteil 7A verschwenkt. Das Stützelement 18 stützt das freie Ende des zweiten Dachteils 7B. Das erste Dachteil 7A wird mit Hilfe des Scharniers 11A um die Schwenkachse 14 verschwenkt.

Fig. 10 zeigt eine zweite Zwischenstellung, in welcher der Lenker 12 im Wesentlichen vertikal angeordnet ist. Das zweite Dachteil 7B ist im Wesentlichen im rechten Winkel zum ersten Dachteil 7A angeordnet.

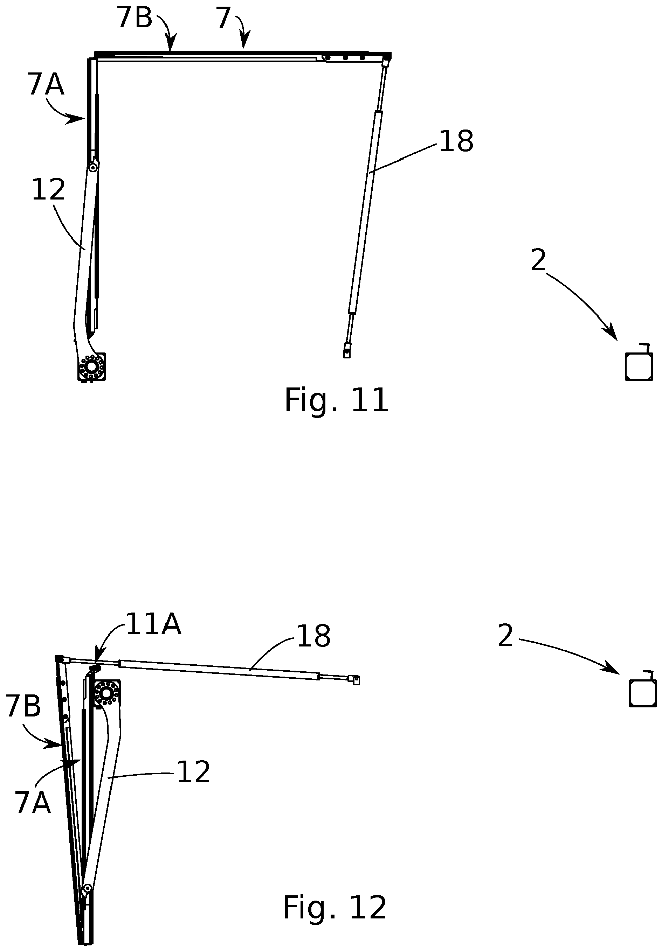

Fig. 11 zeigt eine dritte Zwischenstellung, in welcher der Lenker 12 um 180° gegenüber der Schließstellung verschwenkt im Wesentlichen horizontal angeordnet ist.

Fig. 12 zeigt die Offenstellung, in welcher das erste Dachteil 7A an der Seitenfläche 3 anliegt und das zweite Dachteil 7B um annähernd 180° gegenüber dem ersten Dachteil 7A verschwenkt und neben dem ersten Dachteil 7A angeordnet ist.

Je nach Ausführung können Seitenwände 3 öffenbar oder ortsfest an den Seitenflächen 3 angeordnet sein.

## Patentansprüche

1. Transportbehälter (1), insbesondere für einen Lastkraftwagen, aufweisend:
einen Rahmenaufbau (2),
zwei Seitenflächen (3),
ein Dach (7),
eine Öffnungseinrichtung (9) zum Überführen des Dachs (7) zwischen einer eine Dachöffnung (10) verschließenden Schließstellung und einer die Dachöffnung (10) freigebenden Offenstellung,
**dadurch gekennzeichnet, dass**
das Dach (7) über ein Scharnier (11A) verschwenkbar am Rahmenaufbau (2) angeordnet ist, wobei die Öffnungseinrichtung (9) einen verschwenkbar mit dem Dach (7) verbundenen Lenker (12) und einen Antrieb (13) zum Verschwenken des Lenkers (12) aufweist.

2. Transportbehälter (1) nach Anspruch 1, **dadurch gekennzeichnet, dass** eine Schwenkachse (14) des Scharniers (11A) in der Schließstellung oberhalb der Oberseite des Dachs (7) angeordnet ist.

3. Transportbehälter (1) nach Anspruch 2, **dadurch gekennzeichnet, dass** das Scharnier (11A) einen Verbindungssteg (17) aufweist, welcher die Schwenkachse (14) des Scharniers (11A) mit dem Dach (7), insbesondere mit einem Längsrand (7C) des Dachs (7), verbindet.

4. Transportbehälter (1) nach Anspruch 3, **dadurch gekennzeichnet, dass** der Verbindungssteg (17) in der Schließstellung von der Schwenkachse (14) zum Längsrand (7C) des Dachs (7) schräg nach unten verläuft, insbesondere in einem Winkel von 30° bis 60°, vorzugsweise im Wesentlichen 45°, zur Horizontalen.

5. Transportbehälter (1) nach einem der Ansprüche 1 bis 4, **dadurch gekennzeichnet, dass** die Schwenkachse (14) des Scharniers (11A) in Richtung senkrecht zur Seitenfläche (3) nach innen versetzt ist.

6. Transportbehälter (1) nach einem der Ansprüche 1 bis 5, **dadurch gekennzeichnet, dass** das Scharnier (11A) an einer Längsseite des Transportbehälters (1) angeordnet ist, wobei das Scharnier (11A) in der Schließstellung des Dachs (7) in Richtung senkrecht zur Seitenfläche (3) im Wesentlichen nicht über die Seitenfläche (3) vorsteht.

7. Transportbehälter (1) nach einem der Ansprüche 1 bis 6, **dadurch gekennzeichnet, dass** das Dach (7) ein erstes Dachteil (7A) und ein zweites Dachteil (7B) aufweist, welche an einander zugewandten Längskanten gelenkig miteinander verbunden sind.

8. Transportbehälter (1) nach einem der Ansprüche 1 bis 7, **dadurch gekennzeichnet, dass** als Antrieb (13) für den Lenker (12) eine Drehwelle vorgesehen ist, welche sich an einer Längsseite des Transportbehälters (1) im Wesentlichen in horizontaler Richtung erstreckt.

9. Transportbehälter (1) nach einem der Ansprüche 1 bis 8, **dadurch gekennzeichnet, dass** ein weiteres Scharnier (11B) entsprechend dem Scharnier (11A) vorgesehen ist, wobei das Scharnier (11A) und das weitere Scharnier (11B) in Längsrichtung des Dachs (7) voneinander beabstandet sind.

10. Lastkraftwagen mit einem Fahrzeugaufbau, welcher durch einen Transportbehälter (1) nach einem der Ansprüche 1 bis 9 gebildet ist.
